# EUROPEAN PATENT APPLICATION

(11) **EP 1 619 917 A1**
(43) Date of publication of application: **25.01.2006**
(21) Application number: 04726799.2
(22) Date of filing: 09.04.2004
(51) Int. Cl.: H04Q 7/38, H04L 12/56

(54) **COMMUNICATION SYSTEM AND COMMUNICATION METHOD**

(30) Priority: 11.04.2003 JP 2003108265
(71) Applicant: MATSUSHITA ELECTRIC INDUSTRIAL CO., LTD., Kadoma-shi, Osaka 571-8501 (JP)
(72) Inventor: CHIA, Pei, Yen, 12-19, 760865 Singapore (SG); CHENG, Hong, 07-51, 550405 Singapore (SG)
(74) Representative: Hössle Kudlek & Partner
(86) International application number: PCT/JP2004/005135
(87) International publication number: WO 2004/093480

(57) **Abstract**

A technique for the end terminal provided with services to handle QoS process is disclosed. According to this technique, a terminal based QoS management scheme is implemented to achieve end-to-end QoS wherein the end terminal 21 is responsible for handling of the QoS related functions. In order for QoS management to be handled at terminal, the terminal needs to know the network conditions and external state of entities in order to know what action to be taken. For example, the terminal performs monitoring and usage collection. These performance data are then reported to a central server (SLA manager 28). The central server collects these data from all terminals within its administration domain. The central server also has access to information on the QoS to be given to individual terminals, such as service level. Based on the information, the central server decides what action to be taken by individual terminal and enforces these actions into the affected terminals.

## Description

### TECHNICAL FIELD

This invention relates to a communication system and a communication method, especially a radio communication system and a radio communication method utilizing the wireless technology in a mobile network. This invention can also be used in a heterogeneous network environment to provide end-to-end QoS guarantees.

### BACKGROUND ART

IP networks were originally designed to carry best effort traffic. In best effort service, the delivery of packets is not guaranteed. For applications that are delay sensitive such as real-time multimedia applications, data needs to arrive within a specified delay bound in order for it to be useful. Therefore, these applications need some level of service guarantee from the network that this data is likely to arrive on time in order to be useful. Best effort service, however, is not sufficient to cater for the requirements of these applications.

Therefore, Quality of Service (QoS) support has become an essential component in a system to provide user of services with a certain level of service guarantees. Two very popular methods to provide QoS in a system are using the Integrated Service (IntServ) (non-patent document 1 below) and the Differentiated Service (DiffServ) (non-patent document 2 below) methods or their variations.

IntServ Framework was developed in IETF (Internet Engineering Task Force) to provide individualized QoS guarantees to individual application sessions (flow). It requires individual session to reserve sufficient resource to ensure its end-to-end QoS is satisfied. IntServ operates on a per flowbasis. Per flow resource reservation in IntServ implies the need for a router to process resource reservations and to maintain per-flow state for each flow passing through the router. This will cause a large amount of overheads just to maintain each state of each flow. This makes IntServ solution very unscalable.

To solve the scalability problem, the DiffServ solution is later recommended by IETF. In the DiffServ solution, flows of similar characteristics are aggregated into a class. The number of classes is pre-determined by the network supporting the DiffServ framework. In this framework, packets carry their own state in a few bits at the IP header (DSCP: Differentiated Services Code Point), and do not require the router to keep the states of each flow. Moreover, packets in the same flow may not follow the same path as opposed to IntServ. Each packet receives a particular forwarding treatment based on this DSCP. This DSCP value will determine how this packet is treated, e.g. packets with high priority DSCP will be forwarded first.

Conventionally, the IntServ support and the DiffServ support are handled at the networks. The end terminal has no knowledge of these handlings being taken place. All marking, scheduling, and policing is carried out by the network elements at the network instead of the end terminal. These methods let the network handle the QoS related functionalities based on current network conditions as a whole and not individual end terminals. Therefore, in order to provide better end-to-end QoS experience, the handling of QoS functionalities needs to be carried out at the end terminal itself, as the terminal itself has better knowledge of the state it is at.
Non-patent document 1:
IETF Integrated Service working group
http://www.ietf.org/html.charters/intserv-charter.html

Non-patent document 2:
IETF Differentiated Service Working Group
http://www.ietf.org/html.charters/diffserv-charter.html

Non-patent document 3:
IETF Resource Reservation Protocol (RFC2205)
http://www.ietf.org/rfc/rfc2205.txt;

Non-patent document 4:
3GPP
http://www.3gpp.org

Non-patent document 5:
3GPP2
http://www.3gpp2.org

Non-patent document 6:
"Network Architecture" 3GPP TS 23.002 V5.8.0 (2002-09) ftp://ftp.3gpp.org/specs/archive/23_series/23.002/

Non-patent document 7:
SIP: Session Initiation Protocol - RFC2543

Non-patent document 8:
SDP: Session Description Protocol - RFC2327

Non-patent document 9:
EAP AKA Authentication
http://www.ietf.org/internet-drafts/draft-arkko-pppext-e ap-aka-08.txt

Non-patent document 10:
"Part 11: Wireless Medium Access Control (MAC) and physical layer (PHY) specifications: Specification for Enhanced Security"
IEEE Std 802.11i/D3.0, November 2002

Non-patent document 11:
"IEEE Standard for Local and metropolitan area networks Port-Based Network Access Control"
IEEE Std 802.1x-2001

Non-patent document 12:
"DRAFT IEEE Standard for Local and Metropolitan Area NetworksPort Based Network Access Control Amendment 1: Technical and Editorial Corrections"
IEEE DRAFT P802.1aa/D4 November 5, 2002

Non-patent document 13:
ITU-T Z.120 Message Sequence Chart, 11/1999

Non-patent document 14:
Floyd, S., and Jacobson, V., Random Early Detection gateways for Congestion Avoidance V.1 N.4, August 1993, pp. 397-413 Non-patent document 15:
D. Clark and W. Fang, "Explicit allocation of best effort packet delivery service", IEEE Trans. Networking, 6 (4), 1998, pp. 362-373.

Quality of Service (QoS) support has recently become one of the essential components that make up a successful system. Conventionally, QoS is handled by the network that provides the service to the user. The terminal only involves in the QoS process at the application level, e.g. using RSVP (Non-Patent Document 3) to request certain resources from the network based on application requirements. In the wireless environment, the RSVP no longer suites the QoS control. Mobile Terminal would change its point of attachment from time to time, and thus use different data path even within one service session life cycle. Moreover, the RSVP requires support on every node along the data path, which is not always possible in the large and complicated systems.

When looking at the end-to-end QoS, the mobile terminal is always one of the ends. It is the receiver of the contents, and the user of the service. Therefore, the terminal must participate in the QoS control. Traditional network based QoS controls are usually localized, i.e. control is only based on local network conditions. For example, a terminal sending 2Mbps traffic to another terminal through a few networks could have packet drops in each of the network, and they would perform control separately. This kind of uncoordinated control is inefficient not optimised. Since a mobile terminal is the ultimate consumer of the traffic, it has all the information about the QoS it enjoyed. A system that uses this information for QoS control could bring a better user experience.

In network centric QoS control (QoS control performed by the network elements in the intermediate network), the network could only perform queuing or dropping to ease the traffic congestion. This could not solve the problem completely. For example, if the congestion were caused by a terminal sending too fast, to perform network dropping or queuing would only make the terminal or another terminal to suffer bad service experience. The better way should be allowing the source and the mobile terminal, to perform scheduling of its traffic in a proper manner. Therefore, a signalling method and a traffic control method need to be developed for the mobile terminal.

For the extreme case of network not capable of performing QoS management, the terminal centric QoS control can still enjoy a certain degree of QoS guarantees. If the terminal itself behaves and does not clog the network unnecessarily, then this will lead to congestion avoidance altogether.

### DISCLOSURE OF THE INVENTION

In order to resolve the problems mentioned above, the QoS controller module needs to be transferred from the network to the terminal. The terminal will be made aware of traffic conditions, and the necessary corrections need to be handled at the terminal instead of passing the responsibility to the network. This will have the advantage of not unnecessarily congesting the traffic, and do away on the reliance on network management system to handle all QoS related functionalities.

It also has the advantage of additional level of management if a network management system is in place. If not, the terminal itself has the capability of adjusting itself to enforcement and behaviour correction, e.g. lower transmission rate or remarking packets to lower priority. For networks without QoS capabilities, the terminal will still have some level of QoS if the terminal attached to the network is all capable of behaving.

The end terminal itself needs to be responsible of knowing how much to send and adjust to the network conditions. In order to know the conditions of the network, there's a need for a centralized entity to collect and consolidate the performance data and the network conditions and then feedback to the individual terminals to perform the correction.

### BRIEF DESCRIPTION OF THE DRAWINGS

FIG. 1 is a schematic diagram showing an example implementation of the invention that achieves end-to-end QoS with terminal based control in the embodiment of the invention;
FIG. 2 is a block diagram showing the detail architecture of an example implementation of the terminal centric QoS management framework in the embodiment of the invention;
FIG. 3 is a sequence chart showing an example signalling sequence for QoS reporting and feedback using the architecture introduced in FIG. 2 when the terminal is not connected directly to the home network;
FIG. 4 is a block diagram showing an alternative architecture implementation for the terminal centric QoS control framework shown in FIG. 1;
FIG. 5 is a sequence chart showing an example signalling sequence using the framework introduced in FIG. 4 to achieve the terminal centric QoS control in the embodiment of the invention;
FIG. 6 is a diagram showing an example QoS monitoring at the QoS controller in the embodiment of the invention;
FIG. 7 is a diagram modelling SLA manager monitoring session in the embodiment of the invention;
FIG. 8 is a diagram showing an example of how QoS controller performs QoS monitoring and traffic regulation in the embodiment of the invention;
FIG. 9 is a diagram showing the format of the reporting message (QoS report) for reporting QoS data from the terminal to the SLA manager in the embodiment of the invention;
FIG. 10 is a diagram showing the format of the message for QoS enforcement from the SLA manager to the terminal in the embodiment of the invention;
FIG. 11 is a diagram showing the architecture for the QoS controller at the terminal in the embodiment of the invention; and
FIG. 12 is a diagram showing an action ID' s template of the embodiment of this invention.

### BEST MODE FOR CARRYING OUT THE INVENTION

In this invention, the QoS management functions are transferred to the terminal for more effective end-to-end QoS management. The mobile terminal will be equipped with QoS management capabilities such as managing its transmission rate and also its receiving rate by controlling the number of incoming request. In this invention, there is a central server to monitor all terminals directly based on the service level agreement between the user of the mobile terminal and the service provider. The central server resides at the user' s home network, which is the network where the user subscribes its service from. The terminal will have a QoS controller module performing the reporting and monitoring. This QoS controller also reacts to behavioural changes when it receives enforcement data that tells the terminal what values it should change to. The QoS controller will then operate within the threshold and boundary of the new values.

In the following, an apparatus and a method for the terminal oriented Quality of Service control for packet based on communication network are disclosed. To help understand the invention, the following definitions are used.

"WLAN" refers to wireless local area network. It contains arbitrary number of devices in order to provide LAN services to mobile terminals through wireless technologies.

"3G network" refers to a 3rd generation public access network. An example could be the system defined by 3GPP (non-patent document 4) or 3GPP2 (non-patent document 5).

"Mobile terminal: MT" refers to a device used for accessing the service provided by the WLAN and other networks through wireless technologies.

"Home network" refers to the network where the MT originally comes from in the inter-working scenario. It is the place where the MT's service subscription information is stored.

"Visited network" refers to the network where the MT is attached. It is the network that provides access service to the mobile terminal.

"Network element" refers to any functioning device in the network that can carry out information processing.

"Rule engine" refers to a network element that carries out the rules set by the rule server and interpreted to the local specific commands by the rule interpreter.

"Rule interpreter" refers to a network element that reads the rules given by the rule server, translates them to the local technologies specific commands with appropriate parameters and feeds them to the rule engine to carry out.

"Rule server" refers to a network element that sends relevant rule sets to the rule interpreter and the rule engine based on request or unsolicited.

"Air interface" refers to any radio access technologies for the mobile terminal to access the WLAN.

"Stream" is a gathering of packets transferred in the network that have certain attributes in common.

"Traffic" is a gathering of streams transferred in the network.

"Flow" refers to the data path and the network resources needed for the data path used in delivering the stream.

"QoS" refers to the term Quality of Service of a data stream or traffic.

"Message" refers to the information exchanged among the network elements for the purpose of inter-working control.

"Operation sequence" refers to a series of message exchange among certain network elements in certain order for inter-working control.

"Upper layer" refers to any entity on top of the current entity that processes the packet passed to itself from the current entity.

"SLA" refers to the service level agreement.

"User SLA" refers to the service level agreement between the service provider and the user.

"Network SLA" refers to the service level agreement between a service provider and another service provider.

"AAA" refers to Authentication, Authorization and Accounting functions involved in providing service to the mobile terminal.

In the following description, for purposes of explanation, specific numbers, times, structures, protocol names and other parameters are set forth in order to provide a thorough understanding of the present invention. However, it will be apparent to anyone skilled in the art that the present invention may be practiced without these specific details. In other instances, well-known components and modules are shown in block diagrams in order not to obscure the present invention unnecessary.

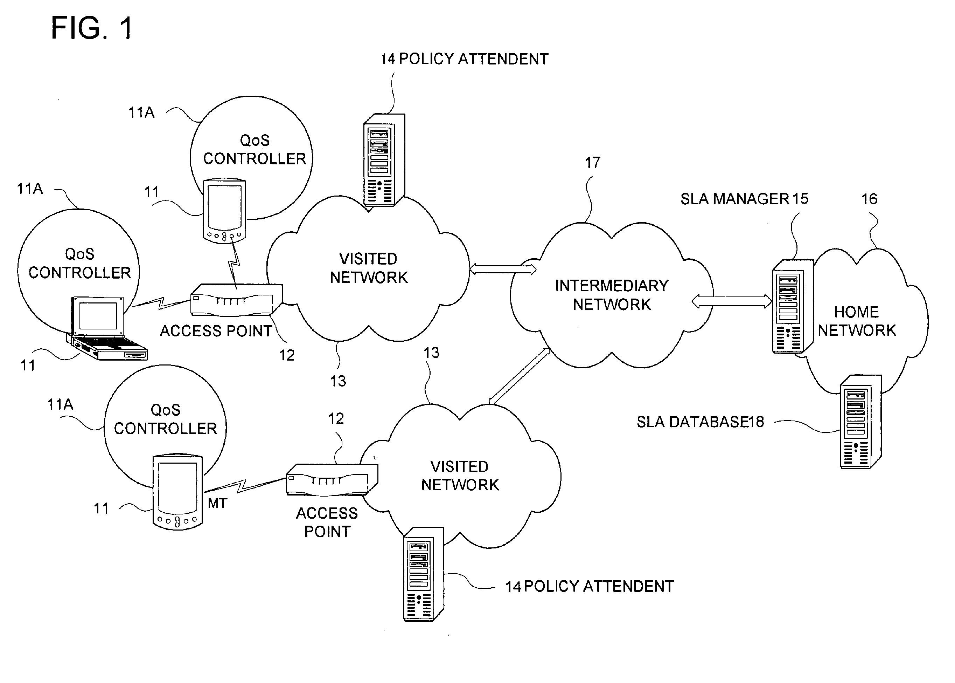

FIG. 1 is a schematic diagram showing an example implementation of the invention that achieves end-to-end QoS with terminal based control in the embodiment of the invention. In this example, the system architecture is used for the 3G networks and beyond. It is obvious to anyone skilled in the art that the invention could be applied to any other networks with the similar architecture and control scheme.

Each mobile terminal (it might be just called terminal below) 11 has the terminal QoS controller module 11A installed. This QoS controller module 11A has the capability of performing QoS management, such as traffic regulation, performance monitoring and packet rescheduling. The access point 12 is the point of attachment of the terminal to the visited network 13. The visited network 13 is the network that provides access service to the terminal, and it is connected to the terminal's home network 16 through one or more intermediary networks 17. The intermediary network 17 could be of any type, e.g. an IP backbone or an ATM network.

A policy attendant 14 resides in each of the visited networks 13. This policy attendant 14 serves as the rule engine of the visited network 13, which executes any rules obtained via the policy control framework to enforce QoS control in the visited Network 13. The policy attendant 14 also performs admission control based on local policy in the visited network 13.

The SLA manager 15 is a special server residing at the home network 16. It has access to the main databases including SLA database 18, which contains information about the SLA of all the users subscribed to this network. The SLA database 18 also contains the service status of each user, e.g. location and service usage information. An example of such database in a 3G network is the HSS (Home Subscriber Server) (non-patent document 6). The SLA manager 15 also functions as a policy server for the home network 16. It makes decisions about the service provisioning based on the user's subscription profile or the network policies. The decisions would be propagated to the policy attendant 14 in the respective network through policy control framework, and to the mobile terminal 11 through the signalling method of this invention.

The mobile terminal 11 and the policy attendant 14 could act accordingly to provide the user a service experience with good QoS. The policy control method used here depends on the deployment of the network. This invention places no additional requirement on the existing policy control framework. In this example implementation, the signalling runs over protocols based on IP. It is obvious to anyone skilled in the art that the signalling could be carried over other communication protocols, e.g. SS7 or ATM natively.

Since the terminal is mobile, it could attach to different networks at different point in time. The network that the terminal is attached to could be its home network 16 or a visited network 13 (the visited network could be any network other than the home network 16). If the terminal is connected directly to the home network 16, a direct signalling channel is guaranteed to the SLA manager 15. If the terminal is attached to a visited network 13, all the request from the terminal needs to go through the visited network 13, and the visited network 13 needs to forward the request to the home network 16. Both-way communication needs to be implemented between the home network 16 and the visiting network 13. Several methods exist to ensure the signalling path for the mobile terminal 11 in this situation, and they are introduced below.

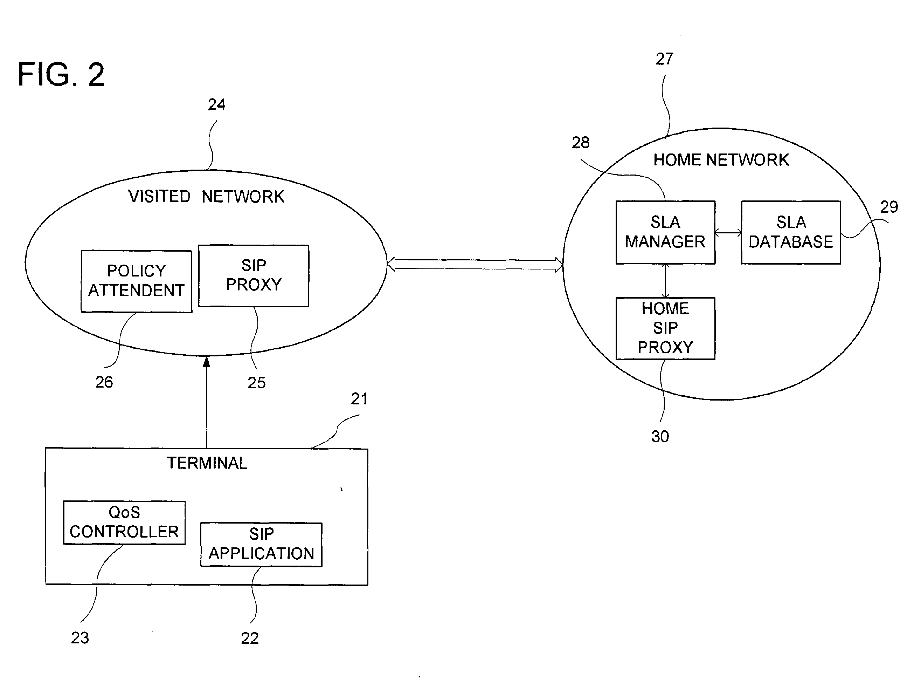

FIG. 2 is a block diagram showing the detail architecture of an example implementation of the terminal centric QoS management framework in the embodiment of the invention. Only the items involved in the signalling and control are shown in this diagram, and those irrelevant entities are omitted. In this architecture, the session management protocol is utilized for the terminal QoS reporting and feedback control. SIP can be used in the example implementation as the session management protocol. It is obvious to anyone skilled in the art that the invention could work with other session management protocol with minimal adaptation. Below is a brief summary of the functions of each module in the architecture.

Terminal 21 is the user equipment, e.g. the mobile terminal. It is equivalent to the terminal 11 plus the QoS controller module 11A depicted in FIG. 1.

SIP application 22 is an application in the terminal 21 that uses SIP as the underlying protocol for session management.

QoS controller 23 is an entity that manages QoS at the terminal 21. It performs performance monitoring, traffic regulation such as rescheduling of packets, queuing of packets, dropping of packets and controls the amount of requests to be carried out. It is an instance of the QoS controller module 11A introduced in FIG. 1.

Visited network 24 is the network the terminal 21 is currently attached to.

SIP proxy 25 at the visited network 24 functions as the forwarding point of SIP messages to the actual destination.

Policy Attendant 26 acts as the local policy administration of the visited network24. It also interfaces with the SLA manager 28 in the home network 27 via the policy control framework.

Home network 27 is the network where the terminal 21 subscribes its services from.

SLA manager 28 is the controller module that accesses the SLA database 29, collects user reports and makes decisions on QoS handling and enforcement.

SLA database 29 is the central data store means that stores all service level agreements. It includes the SLAs between the user and the service providers and also the SLAs among the service providers. Furthermore, it also maintains the services status information about each user, e.g. its location and service requested. Home SIP proxy 30 is the SIP proxy that resides at the home network 27.

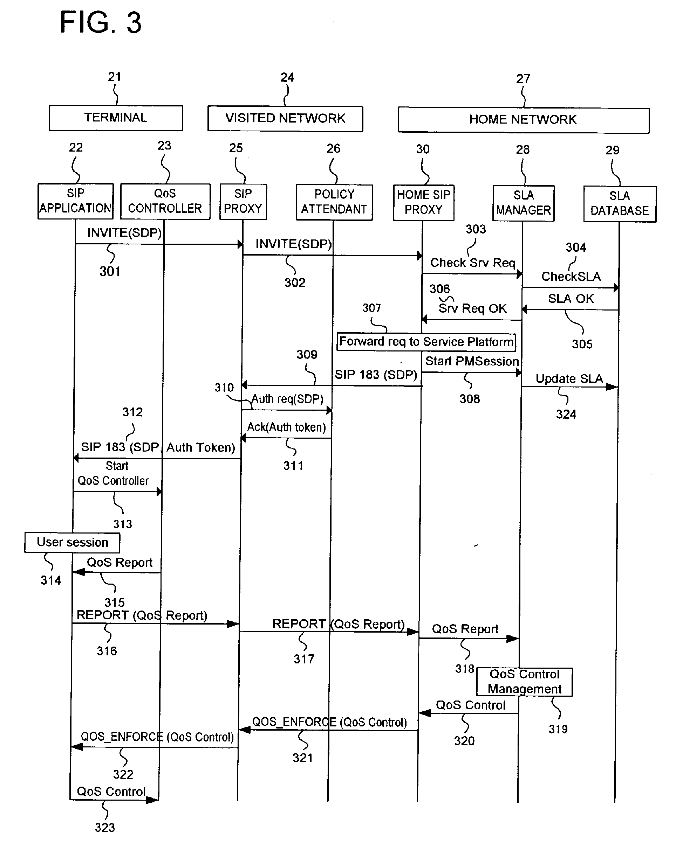

FIG. 3 is a sequence chart showing an example signalling sequence for QoS reporting and feedback using the architecture introduced in FIG. 2 when the terminal is not connected directly to the home network. The terminal 21 is attached to the visited network 24, and no direct IP connection is available to home network 27. To access the service provided by the home network 27, the terminal 21 must use certain session control mechanism. In this example, SIP is used for illustration purpose. It is obvious to anyone skilled in the art that the invention could work with other session control protocol as well.

When the terminal 21 initiates a session to the callee party, it issues an "INVITE" with its corresponding Session Description Protocol also known as SDP message through a SIP application 22 (301: INVITE (SDP)). Embedded within the SDP is a QoS control capability tag that states that this terminal has a QoS control capability. The "INVITE" message first passes through the SIP proxy 25 at the visited network 24. The SIP proxy 25 at the visited network 24 will examine this packet and forward the SIP message to the home SIP proxy 30 at the home network 27 (302: INVITE (SDP)). The home SIP Proxy 30 is a SIP proxy that resides at the Home Network 27. Before forwarding this request to other entities for further processing, the home SIP Proxy 30 would also check the service request via the SLA Manager 28 that the service requested is authorized to the caller (303: Check Srv Req). This information is part of the caller's SLA stored in the SLA database 29.

The SLA manager 28 would extract the callers SLA from the SLA database 29 if its not already available (304: CheckSLA) . The SLA database 29 would push the caller's SLA information to the SLA manager 28 (305: SLA OK). The SLA information transferred here may not be the complete user SLA. It could contain only the relevant information regarding the service request indicated by the SLA manager 28 in message (CheckSLA). If service is authorized in the caller's SLA, the SLA manager 28 would inform the home SIP proxy 30 to continue the session processing (306: Srv Req OK). Otherwise, the SLA manager 28 would instruct to reject the session request, and stop further processing.

The home SIP proxy 30 would then forward the SIP message to the service platform, e.g. the callee's home SIP proxy, for further processing according to the service request (307: forward Req to Service Platform). When the service platform yields a success in this step 307, the home SIP proxy 30 would receive a SIP 183 message (non-patent document 7, 8). The home SIP Proxy 30 will issue a "Start PMSession" message to the SLA manager 28 if the SDP message from the terminal 21 has the QoS control capability tag (308: Start PMSession). The SLA Manager 28 will trigger the monitoring session when it receives this "Start PMSession".

If necessary, the SLA Manager 28 would update the user' s SLA stored in the SLA database 29 accordingly (324 Update SLA). It is obvious for anyone skilled in the art that the same mechanism can be applied to update the SLA as and when necessary. At the same time, the home SIP proxy 30 would further relay the SIP 183 message also embedded with a QoS control capability tag to the SIP Proxy 25 at the visited network 24 (309: SIP 183 (SDP)). The QoS control capability tag at this acknowledgement message (SIP 183 message) will tell the terminal 21 that it can start the QoS controller module. Before forwarding this message to the terminal 21, the SIP Proxy 25 at the visited network 24 would check whether the terminal 21 is authorized to use the visited network 24' s resource and its availability with the policy attendant 26 (310: Auth req (SDP)).

If the service requested is authorized and resource is available, information to indicate authorization (authorize token) would be sent to the SIP Proxy 25 at the visited network 24 by the policy attendant 26 (311: Ack (Auth token)). After received the authorize token, the SIP Proxy 25 at the visited network 24 would forward the SIP 183 message together with this token to the terminal 21 (312: SIP 183 (SDP, Auth Token)). When the terminal 21 received this message, it would inform its QoS controller 23 of information on this session, and then QoS controller 23 starts to work (313: Start QoS controller).

If the policy attendant 26 could not authorize the service due to local policy or resource limitation reasons, it would include information to indicate invalid in the message 311. Once received this information to indicate invalid, the SIP Proxy 25 at the visited network 24 would not forward the SIP 183 message to the user, but instead send a SIP 488 error message together with the invalid token to the terminal 21. Once the terminal 21 received the message with the information to indicate invalid, it would initiate a "BYE" message through the SIP proxy 25 to close the session. This message exchanges for the failed authorization scenario are omitted to be shown in FIG. 3.

After receiving the SIP 183 message, the terminal 21 would proceed with normal SIP controlled service session (314: User session). During this service session, the QoS controller 23 would generate QoS reports on the service session, and use the above mentioned SIP signalling path to feed back to the SLA manager 28 at the home network 27.

The QoS controller 23 would periodically pass the QoS report about the service session to the corresponding SIP application 22 (315: QoS Report). A new SIP method can be defined for this purpose, e.g. "REPORT" message. The SIP application 22 would generate a "REPORT" message and place the QoS report information obtained from the QoS controller 23 in its SDP attribute fields. The destination address of this message is the home SIP proxy 30 at the home network 27. The SIP application 22 forwards this report message to the SIP Proxy 25 at the visited network 24 (316: REPORT (QoS Report)), and then SIP Proxy 25 at the visited network forwards this report message to the specified destination address (home SIP proxy 30) in the message (317: REPORT (QoS Report)) . The SIP Proxy 25 at the visited network 24 would treat this as an "OPTIONS" method if the SIP Proxy 25 has no support for this REPORT method to the SIP Proxy 25 at the visited network 24.

The home SIP proxy 30 would extract the embedded QoS report information once it receives this method request. The QoS report information would then be forwarded to the SLA manager 28 for further processing (318: QoS Report). After receiving this QoS report information, the SLA manager 28 would use the network policy and other relevant information to make QoS control management (319: QoS Control Management) . This management includes adjusting QoS parameters assigned to the terminal 21, and/or updating the corresponding data in the SLA database 29.

For example, the "REPORT" message is as follows.
/* new method REPORT that carries QoS reporting */
REPORT sip:foo.bar.com SIP/2.0
From : sip:terminall@foo.bar.com /*terminal's SIP address*/
To : sip: main@home.com /*Home Network's SIP Proxy address*/
Cseq : 1 REPORT
a = packet_sent:xxxx /* attribute fields that carries QoS Parameter information*/
a = packet_recv:xxxx
a = avg_bandwidth:xxxx

Other QoS parameters that may be included for reporting includes QoS class, bytes sent, bytes received, bytes dropped, packets dropped, average bandwidth, maximum bandwidth, dropping interval, average delay, jitter, utilization and send dropping threshold. The QoS parameters can be expanded and not limited to those listed above.

If any QoS adjustment were necessary, the SLA manager 28 would send a QoS control message to the home SIP proxy 30 together with the identifier of the terminal 21 (320: QoS Control). The home SIP proxy 30 would then create a SIP message with special code indicating the QoS control purpose, and put the received QoS control message into it. Another new method can be defined, e.g. QOS_ENFORCE message. The home SIP proxy 30 would forward this QOS_ENFORCE message to the SIP proxy 25 at the visited network 24 of the terminal 21 (321: QOS_ENFORCE (QoS Control)). The SIP proxy 25 at the visited network 24 would forward this message transparently to the terminal 21's SIP application 22 (322: QOS_ENFORCE (QoS Control)).

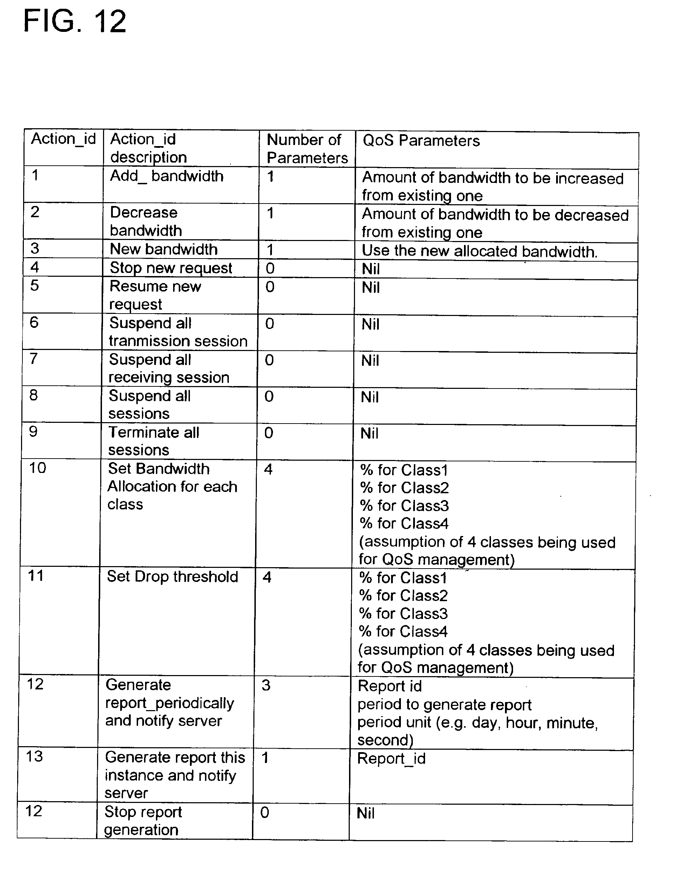

The SIP application 22 in the terminal 21 would extract the embedded QoS control information from the SIP TBD message once it reads the code indicating the QoS control, and forward the extracted QoS control message to the QoS controller 23 together with the service session information (323: QoS Control). The QoS controller 23 would then act accordingly to the instruction provided in the QoS control message, and adjust the behaviour of the terminal 21 to achieve better QoS to the service session. FIG. 12 is a diagram showing an action ID's template of the embodiment of this invention. In the example below, the above-mentioned instruction is carried in its "Action_ID" attribute field, and an example of actions in the "Action ID" attribute field is listed in FIG. 12.
QOS_ENFORCE sip:home.com SIP/2.0
From : sip: main@home.com
To : sip:terminall@foo.bar.com
Cseq : 1 QOS_ENFORCE
A = action_id:xxxx /*action attribute*/
A = <Qos Parameter>:yyyy

It is obvious to anyone skilled in the art that the SLA manager 28 could send unsolicited QoS control message using the same mechanism. For example, when the network status changes or the network policy varies, the SLA manager 28 would need to adjust the QoS provision parameters of the terminal 21, and therefore trigger the sending of QoS control message to the terminal 21.

The QoS controller 23 at the terminal 21 is shared across the applications within the terminal 21. Therefore, it remains active as long as there are application activities. If a new session detects the QoS controller 23 is already running, it will not start a new QoS controller 23' s process but use the existing one for the monitoring, reporting and enforcement.

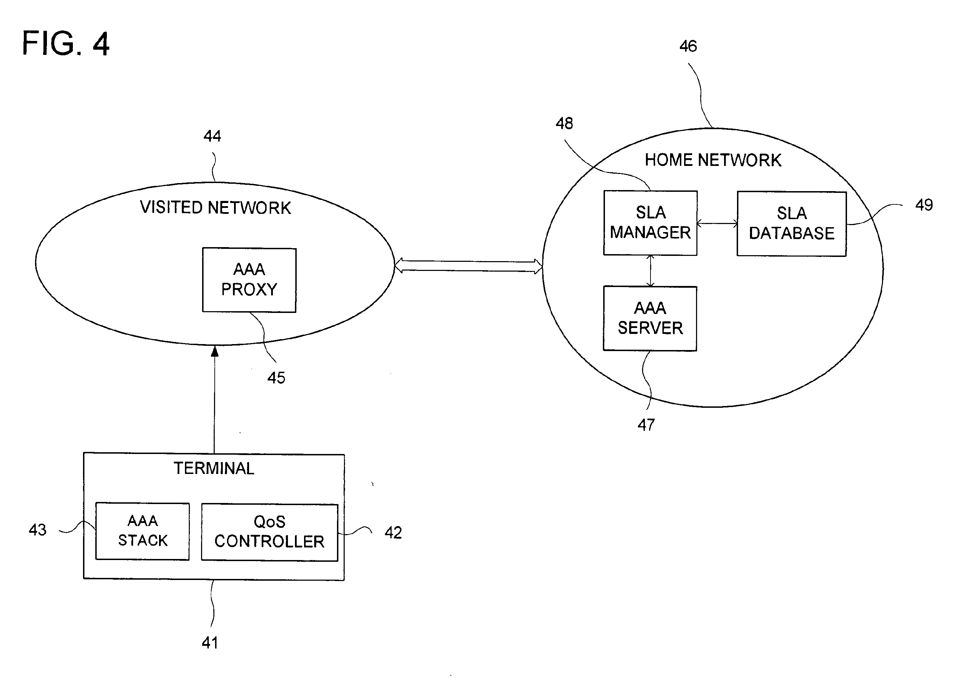

FIG. 4 is a block diagram showing an alternative architecture implementation for the terminal centric QoS control framework shown in FIG. 1. In this architecture, the AAA (Authentication, Authorization and Accounting) framework is utilized for establishing the QoS reporting and enforcement control. In this FIG. 4, only elements involved in the signalling and control are included. The terminal 41 comprises two entities for the signalling, the QoS Controller 42 and the AAA Stack 43. The QoS controller 42 is the QoS controller module 11A shown in FIG. 1. It performs QoS enforcement at the terminal 41 and regulates the traffic that goes out of the terminal 41. The QoS controller 42 also monitors and collects QoS usage information of the terminal 41 and feedbacks to the SLA manager 48 in the terminal 41's home network 46.

The AAA stack 43 is the entity that controls the terminal 41's AAA (Authentication, Authorization and Accounting) procedures. For example, in a 3G Network, it could be the EAP-AKA (non-patent document 9), and in an IEEE802.11i (non-patent document 10) WLAN, it could be the IEEE802.1x (non-patent document 11, 12) plus the key management entities. Since the AAA stack 43 is required in a standard network, this invention poses no extra requirements on the network. The terminal 41 attaches to the visited network 44, and the visited network 44 provides standard AAA facilities, the AAA proxy 45, to relay the AAA message from the terminal 41 to the AAA server 47 in the home network 46. In actual implementation, the AAA proxy 45 could be collocated with other network entities. For example, in the IEEE802.11i system, the AAA proxy 45 could be the authenticator in the access point, which encapsulates the EAP packets from the terminal 41 into Radius/Diameter packets. The SLA manager 48 and SLA database 49 in the home network 46 are identical to the entities 15 and 18 defined in FIG. 1.

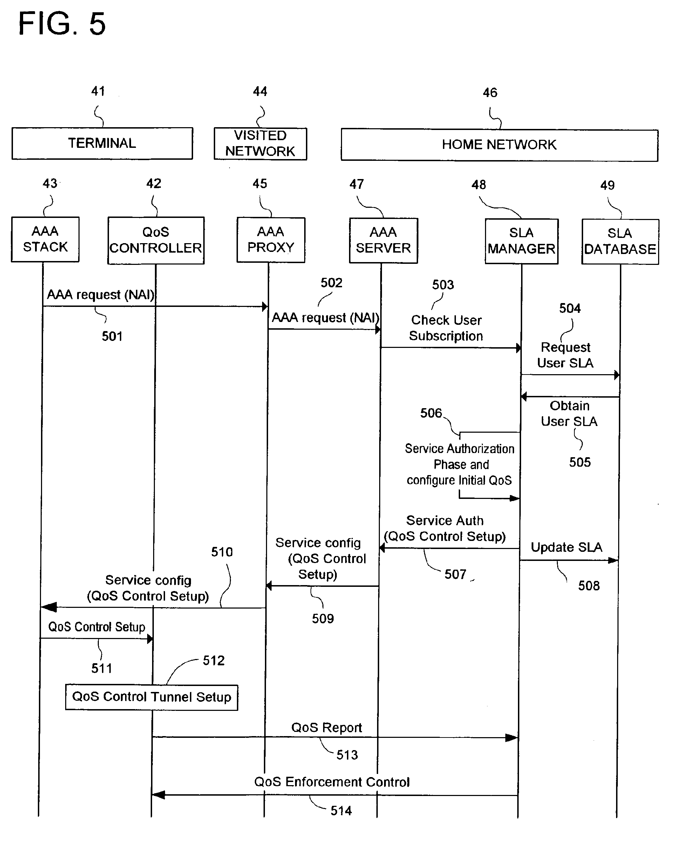

FIG. 5 is a sequence chart showing an example signalling sequence using the framework introduced in FIG. 4 to achieve the terminal centric QoS control in the embodiment of the invention. When the terminal 41 associates with the visited network 44 and wants to access certain services for the first time, the AAA stack 43 of the terminal 41 sends an "AAA request" to the AAA proxy 45 in the visited network 44 (501: AAA request (NAI)). This "AAA request" would include the terminal 41's identity and home domain information. For example, in the 3G network, this information is in the form of a Network Access Identifier (NAI). An example content of the NAI could be "terminal1@foo.bar.com", where the "terminal1" is the identity and "foo.bar.com" is the home domain information. The AAA proxy 45 forwards the request to the AAA server 47 of the user's home network 46, using the domain information described in the NAI (502: AAA request (NAI)) .

After receiving the message, the home network 46's AAA server 47 extracts the user identity and the service information from the AAA request. The AAA server 47 would further send this request to the SLA manager 48. The SLA manager 48 would check the user's subscription information to authorize the service against the user's subscription information in the SLA (503: Check User subscription). The SLA manager 48 would extract the user's SLA from the SLA database 49 if it were no available (504: Request User SLA, 505: Obtain User SLA). If the user' s SLA allows the requested service, the SLA manager 48 would provide further service configuration information according to the network policy and other information stored in the SLA (506: Service Authorization Phase and configure Initial QoS). Furthermore, the SLA manager 48 would also check the capability of the terminal 41 via its NAI embedded in the AAA request. If a terminal 41 is QoS control capable, a pseudo service, "QoS control", will be requested by default together with the actual services.

For example, if the NAI is used to indicate the service, it could be in the form of "terminal1@QoSControl.foo.bar.com", where the "QoS Control" right after the "@" sign indicates that the terminal 41 is QoS control capable. It is obvious to anyone skilled in the art that other forms of indication will be possible depending on the schemes adopted in the AAA procedure to identify the service.

When the SLA manager 48 finds this "QoS Control" pseudo service, it would initiate the service monitor session for the terminal 41, and configure the parameters for setting up the connections for the QoS Control. This configuration includes the setting of QoS initial parameters for the QoS Controller 42, allocating a home network address for the QoS control purpose, managing the tunnelling configurations for the control messages, etc. This special setting would be embedded to the normal service configuration and sent together to the AAA server 47 (507: Service Auth (QoS Control Setup)) . If necessary, the SLA manager 48 would update the SLA stored in the SLA database 49 at the same time (508: Update SLA). The AAA server 47 would then create a "Service Config" message, embed all the settings inside and send it to the AAA stack 43 of the terminal 41 via the AAA proxy 45 in the visited network 44 (509: Service Config (QoS Control Setup, 510: Service Config (QoS Control Setup)).

When the AAA stack 43 received a "Service Config" message, it would extract all the service information embedded and pass them to corresponding application. Similarly, the configuration of "QoS Control" pseudo service would be passed to the QoS controller 42 in the terminal 41 to trigger the QoS service session (511: QoS Control Setup). The QoS controller 42 would use the initial QoS configuration embedded to enforce the QoS control at the terminal 41. The QoS controller 42 would also use the embedded tunnelling configuration to setup a tunnel towards the SLA manager 48 at the home network 46 (512: QoS Control Tunnel Setup). This tunnel would be used by the QoS controller 42 to report QoS statistics to the SLA manager 48, and by the SLA manager 48 to send QoS enforcement command to the QoS controller 42.

In this scheme, the QoS Controller 42 behaves like a normal application to the AAA stack 43. The QoS setting and tunnelling setting are transparent to the AAA stack 43. Therefore, although the QoS controller 42 uses the AAA framework for the setup, it requires no modification to the standard AAA stack 43. That means this makes the invention highly deployable in any standard network.

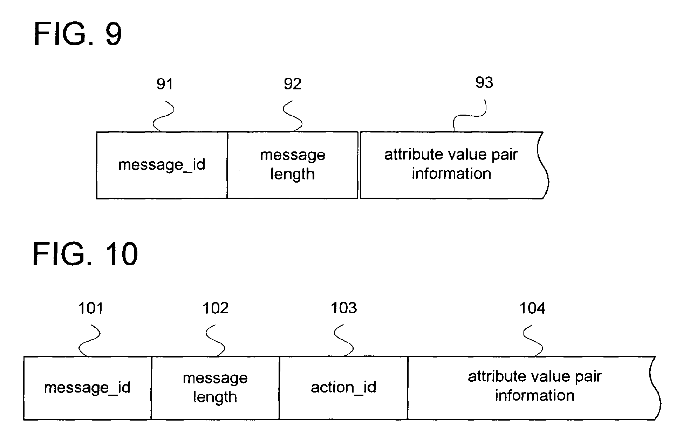

When the user session goes on, the QoS controller 42 would generate QoS statistics that reflects the service experience observed at the terminal 41. The QoS controller 42 would use the tunnel setup above to report this information to the SLA manager 48 (513: QoS Report) . FIG. 9 is a diagram showing the format of the reporting message (QoS report) for reporting QoS data from the terminal to the SLA manager in the embodiment of the invention. Each said reporting message starts with a message_ID field 91 followed by the message length field 92 and then followed by the payload. The payload consists of attribute value pair information 93. The attributes can consist of QoS parameters or information attributes.

Examples of QoS Parameters are QoS class, bytes send, bytes received, bytes dropped, packets dropped, average bandwidth, maximum bandwidth, dropping interval, average delay, jitter, utilization and send dropping threshold. The QoS parameters can be expanded and not limited to those listed above. Fixed length attribute value pair is employed in this example, therefore only one message length field 92 is needed for the entire message. If variable length attribute value pair is employed, each pair needs an additional length field to indicate the length of the attribute value pair.

After receiving the report from the QoS controller 42, the SLA manager 48 would carry out some QoS management process, and decide whether any adjustment needs to be done at the terminal 41. It would also update the SLA in the SLA database 49 if necessary. If any change at the terminal 41 is necessary, the SLA manager 48 would send a QoS enforcement message to the QoS controller 42 through the QoS control tunnel setup 512 (514: QoS Enforcement Control). FIG. 10 is a diagram showing the format of the message for QoS enforcement from the SLA manager to the terminal in the embodiment of the invention. The QoS enforcement message comprises a message_ID field 101, a message length field 102, an Action_ID field 103 and QoS parameters field 104. The QoS enforcement message has its own set of pre-defined message templates. Similar to the said reporting message format, the QoS parameters 104 can be zero, one or many QoS data fields. An example for the Action_ID field 103 and its corresponding actions are those similar in FIG. 12.

Once the tunnel is setup in the QoS control tunnel setup 512, it is transparent to the SLA manager 48 and the QoS controller 42. These two nodes would communicate with each other like in the same subnet. The address of the SLA manager 48 and corresponding port number could be sent to the QoS controller 42 during the "QoS Control" service setup time (at the QoS control setup 511). The address of the terminal 41 is assigned by the SLA manager 48 during the service authorization phase 506, and therefore is always available.

For end-to-end communication for the QoS control, the SLA manager 48 needs only to write to the terminal 41' s address and pre-defined port number, e.g. IP address "x x x x" at port "s s", whereas the QoS controller 42 of the terminal 41 needs to write to SLA Manager 48's address and the port number obtained in the service authorization phase 506, e.g. IP address "y y y y" at port "pp". Intermediate route is handled within the tunnelling channel. It is obvious to anyone skilled in the art that the invention could be applied to any addressing scheme instead of using an absolute address.

The tunnelling channel only needs to be setup once per terminal 41, usually at the first time it is requested for a service in the visited network 44, i.e. there is only one instance of the pseudo "QoS control" service per terminal 41. The teardown of the channel could be decided by the SLA manager 48. For example, when the terminal 41 is no longer associated with that visited network 44 or no more service session exists, the SLAmanager 48 could signal the AAA server 47 to delete the settings on control nodes, e.g. GGSN.

The SLA manager 48 could also send unsolicited QoS enforcement message 514 to the QoS controller 42. The overall system works on the reporting and enforcing/updating concept. Both the policy attendant 14 and the QoS controller 11A need to perform reporting to the SLA manager 15 in FIG. 1. The QoS controller 11A will report on the state observed at the terminal 11, and the policy attendant 14, on the other hand, will report the state and conditions of the network to the SLA manager 15. The reporting can be performed periodically or when triggered. When SLA manager 15 determined the needs to make any adjustment based on the reports from either the Policy Attendant 14 or the QoS Controller 11A, it would issue the QoS enforcement message. It is obvious to anyone skilled in the art that the SLA manager 15 could also use the policy control framework to adjust the network at the same time if necessary, which is not shown in the figures.

The two signalling explained earlier are the signalling mechanism needed to setup a path to pass QoS data from terminal 11 to home network 16 and vice versa in order to achieve end-to-end QoS control.

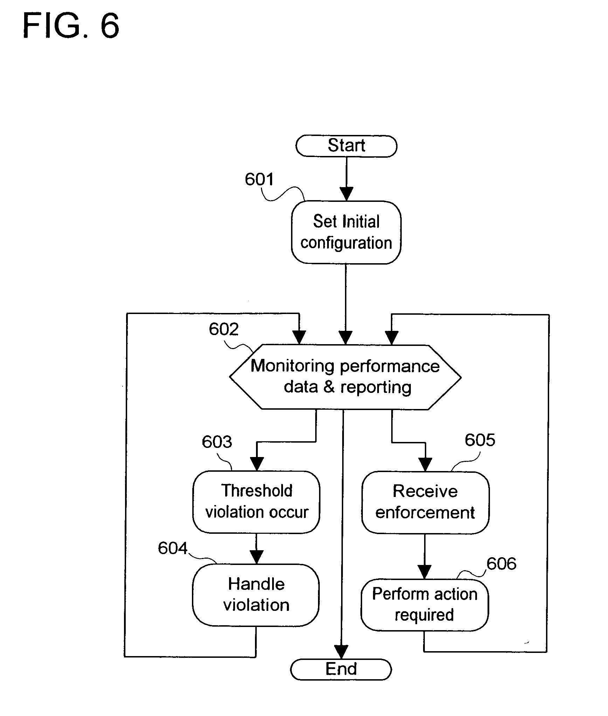

Once the terminal 11 receives the QoS enforcement command from the SLA manager 15, the terminal 11's QoS controller 11A will react to this enforcement command by changing current state to match that of the enforcement command. FIG. 6 is a diagram showing an example QoS monitoring at the QoS controller in the embodiment of the invention. It is modelled using the High Level Message Sequence (non-patent document 13). When the terminal 11's QoS controller 11A starts, it will be configured with some preset initial values or those obtained from the initial configuration state (601: Set Initial configuration). These values include threshold values for the different QoS metrics used for performance of data monitoring. When the terminal 11's QoS controller 11A starts, it will start performance, and perform usage data collection and monitoring. It also performs reporting, that is to feedback the data collected earlier, pack it into a known format and then send it to a central server for consolidation (602: Monitoring performance data & reporting) . In this case, the central server shall be, for example, the SLA manager 15. During performance monitoring, it compares the performance data to its threshold values and if violation occurs (603: Threshold violation occur), it will perform,the necessary correction to handle this violation (604: Handle violation).

The correction action taken here involves delaying of transmission packet, dropping the packet entirely and/or packet rescheduling if transmission bandwidth exceeds the threshold values, or self-terminating the session entirely. Therefore, transmission bandwidth can be controlled in this manner. For receiving packets, the receiving bandwidth can be controlled by minimizing the request for incoming packets and also bandwidth request for any incoming packets can be reduced. When network condition changes, the policy server (the central server) will inform the SLA manager 15 of these changes. SLA manager 15 will then make a decision on the policy change. This involves updating the rule engine at the policy server and/or updating the configuration of the affected terminals 11s' QoS controller to manage QoS in the new updated threshold values. The updating of configuration to affected terminals 11 involves passing of enforcement data to the said affected terminals 11. The said affected terminals 11 upon receiving this enforcement data (605: Receive enforcement) will perform the necessary updates or changes based on this enforcement data (606: Perform action required). The monitoring process will resume based on the new updated values.

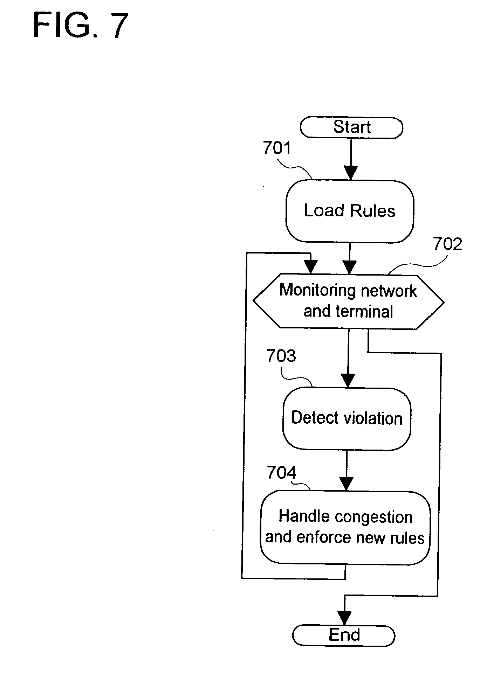

FIG. 7 is a diagram modelling SLA manager monitoring session in the embodiment of the invention. When the performance monitoring session starts, the SLA manager 15 will load the necessary SLA information and the current rules for monitoring from the SLA database 18 (701: Load Rules). The SLA manager 15 receives reports on the status of the terminals 11 and the policy servers periodically (702: Monitoring network and terminal). The reports can also be received in a non-periodic manner, e.g. pushed to the SLA Manager 15 or upon request by the SLA Manager 15. The status will be compared to the SLA information. If an alarm or violation is detected (703: Detect violation), the SLA manager 15 will decide the action to be taken depending on the nature of the violation and the states of both the network and the terminal 11 (704: Handle congestion and enforce new rules). The SLA manager 15 will enforce new rules or decide on the enforcement data, pack it to a known format before it performs the enforcing mechanism by updating the policy server with new rules, or request the terminal 11 to change its configuration.

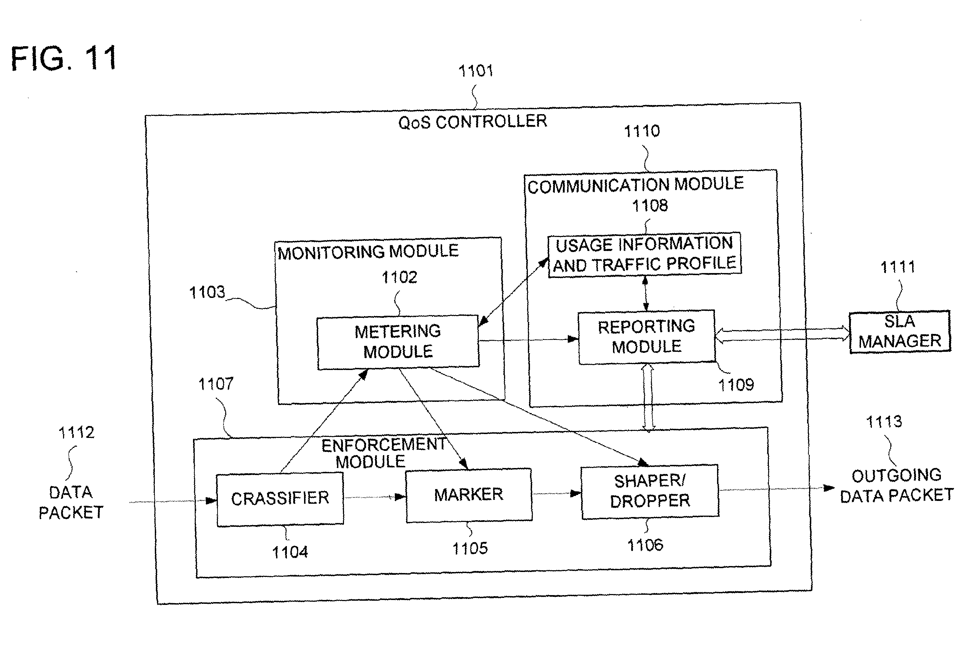

FIG. 11 is a diagram showing the architecture for the QoS controller at the terminal in the embodiment of the invention. This QoS controller 1101 comprises the following sub-components. Monitoring module 1103 comprises a metering module 1102 for collecting performance monitor data and also performing check for any threshold violation. Enforcement module 1107 comprises the classifier 1104, marker 1105 and shaper/dropper 1106 for traffic regulation. Communication module 1110 comprises the usage information and traffic profile 1108, to store all collection of performance monitoring data from the metering module 1102 and also a reporting module 1109 to communicate with SLA manager 1111. This communication module 1110 also initiates enforcement module to perform correction when enforcement data is received.

Before a data packet 1112 is sent out from the terminal, it needs to be classified by classifier 1104 according to its priorities. Each application has a pre-defined priority. After classification, it will be sent to the marker 1105 to be marked as "in_profile" or "out_profile". The metering module 1102 will check against the usage information and traffic profile 1108, and inform the marker 1105 on the current state of terminal. The marker 1105 then marks the packets as "in_profile" or "out_profile" depending on the current state.

After this marking process, the shaper/dropper 1106 decides whether to delay the sending of packet or to drop the entire packet. The shaper/dropper 1106 also checks the current terminal via Metering module 1102 whether to delay transmission or to drop packets. Packets marked as "out_profile" have higher probability of dropping compared to "in_profile" packets. The outgoing data packet 1113 is the packet that is actually sent out. The reporting module 1109 will periodically performs reporting back to SLAmanager 1111 and SLA manager 1111 also sends QoS Enforcement message back to the terminal via this reporting module 1109. The enforcement message will be enforced onto relevant enforcement module 1107 if any enforcement actions are required.

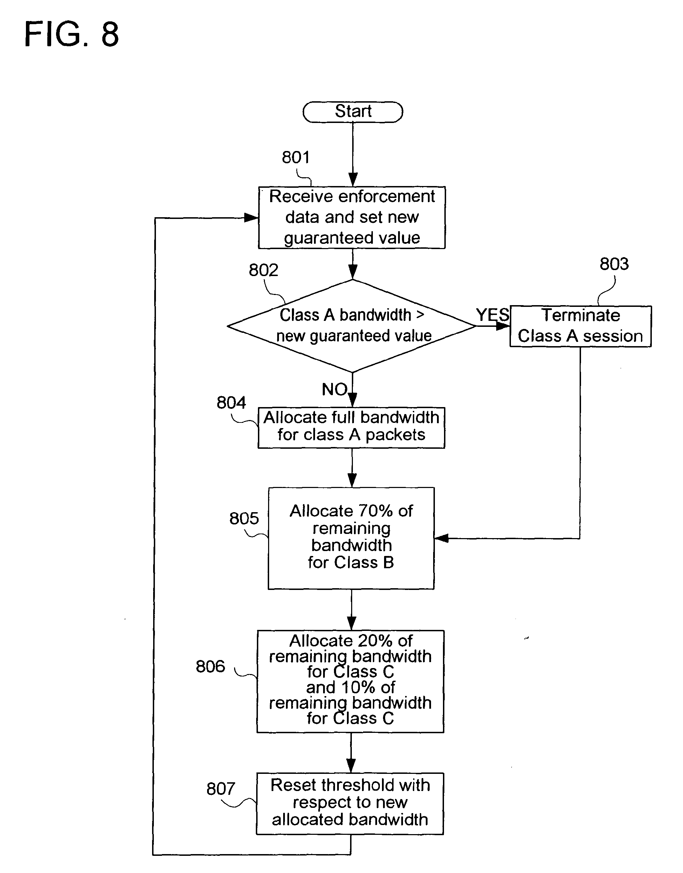

FIG. 8 is a diagram showing an example of how QoS controller performs QoS monitoring and traffic regulation in the embodiment of the invention. When congestion occurs, the SLA manager 1111 will pass QoS enforcement data to the QoS controller 1101 at the terminal for behavioural change. In this example, data packets 1112 are classified by the classifier 1104 into 4 different priority levels A, B, C and D with A being the highest priority and D the lowest priority. Transmission bandwidth allocated to the terminal is used as the determinant for performing correction. A combination of other parameters can also be used as the determining factor for performing correction.

For a scenario when QoS controller 1101 receives enforcement data telling it to lower its bandwidth, QoS controller 1101 will set the existing value to the new value received (801: Receive enforcement data and set new guaranteed value). For the case of congestion, SLA manager 1111 decides to reduce the allocated transmission bandwidth to low priority terminal. The SLA manager 1111 passes the enforcement data with the necessary information to the affected terminal. When the terminal receives this enforcement data, it' 11 compare the enforcement data against its existing value before performing the updates. For the "total allocated bandwidth" measurement data, if the new value is less than the existing, correction will be performed.

In this example, packets of type A classification will be given the highest priority. If the total bandwidth is insufficient to support the required bandwidth for the type A application (802: Class A bandwidth > new guaranteed value), then the session will be terminated if there's an ongoing session (803: Terminate Class A session). Else, packets of type A will be given all the bandwidth it requires (804: Allocate full bandwidth for class A packets). After all allocation to packets of type A, then the remaining bandwidth will be allocated the types B, C and D, for example in the ratio of 7:2:1 respectively (805: Allocate 70% of remaining bandwidth for Class B, 806: Allocate 20% of remaining bandwidth for Class C and 10% of remaining bandwidth for Class C). For packets of type B, C and D classification, bandwidth correction is performed by transmission rate control, packets dropping and delaying the packets transmission. Packets from the different classes are queued according to their allocated bandwidth and class. Based on this number, the threshold values for each type are computed (807: Reset threshold with respect to new allocated bandwidth). Packets will also be marked as "in profile" or "out profile" depending on whether the threshold is reached. If bandwidth usage exceeds the threshold, e.g. for type B, which can be a video encoder application, the QoS controller may interface with the video encoder and instruct it to encode at a lower bit rate.

Alternatively, if there's no interface to the said application and the QoS controller can not interface with the video encoder, then QoS controller may decide to selectively drop packets in order to meet the threshold values. Incoming packets will be selective marked as "out profile" and those marked packets with "out profile" will be dropped first. For types C and D, packets of type C are queued to the transmission more often than type D. Packets of type D will be queued last based on the ratio allocated to those. The above ratio is used as illustration only. The allocation of bandwidth to the different classes can be of any ratio and classification types can be any number and not limited to types A, B, C and D. Also, the QoS controller can employ other means of scheduling and queuing mechanism such as the RED (non-patent document 14) and RIO (non-patent document 15) algorithm for queuing and not limited to the example above.

### INDUSTRIAL APPLICABILITY

This invention allows the QoS management to be handled at the terminal which is the end entity enjoying the service. This will allow the source to manage the resource more efficiently and avoid causing unnecessarily congesting the network. For the case of network which does not have QoS control, the terminal would still be able to have a certain degree of QoS guarantee when the terminal which is attached to the network has the individual QoS control, and does not clog up the network by controlling the amount of packets to be sent and the amount of request to be made. This also frees up the responsibility of the network to perform this tasks.

## Claims

1. A communication system for achieving end-to-end Quality of Service in a mobile network using terminal centric control comprising:
a terminal with QoS control module that is capable of performing QoS monitoring, reporting and enforcement;
a central controller that accepts QoS reports from the terminal and gives QoS enforcement instructions to the QoS control module in the terminal; and
a central database that stores subscription information of a user who uses the terminal and service level agreement information.

2. The communication system according to claim 1, further comprising:
a policy control framework that is capable of carrying management decision to network nodes for service and QoS enforcement; and
a security control framework that is capable of authenticating the user, authorizing the service and resources and collecting accounting information based on the user's subscription information.

3. The communication system according to claim 1 or 2, comprising:
means for enforcing network QoS by exchanging information with the policy control framework;
means for managing QoS enforcement of the terminal based on the user's subscription information and terminal status by retrieving the user's subscription information from the central database;
means for detecting a change of the terminal status;
means for synchronising the terminal status by updating the user's subscription information in the central database when any status change is detected; and
means for securing the message exchange with the terminal by using security association obtained from the user's subscription information.

4. The communication system according to claim 1 or 2, comprising:
a local database for storing the QoS information of each terminal;
a local database for storing the tunnelling information of each terminal for QoS control and reporting purpose; and
a local database for storing status information of a network where the each terminal is attached.

5. The communication system according to claim 1 or 2, comprising;
a proxy node that would securely forward messages from the terminal to the central controller in its home domain according to domain information provided by the terminal when the terminal is not directly attached to the home domain; and
a proxy node that would securely forward messages from the central controller to the terminal.

6. The communication system according to claim 1 or 2, comprising:
a monitoring node in the network where the terminal is attached to that would report network information relevant to the terminal to the central controller; and
an enforcement node in the network where the terminal is attached to that would carry out enforcement command from the central controller to provide service to the terminal.

7. The communication system according to claim 1 or 2, wherein the QoS control module in the terminal comprises:
a monitor module that collects QoS information from the terminal and all running applications;
a communication module that reports the collected QoS information to the central controller and receives enforcement instructions from the central controller; and
an enforcement module that regulates a behaviour of the terminal according to metrics received through the communication module.

8. The communication system according to claim 7, wherein the QoS control module in the terminal further comprises a local database for storing the collected QoS information.

9. The communication system according to claim 7, wherein the monitor module comprises:
means for capturing the QoS information and storing the QoS information at a local database in the terminal;
means for monitoring threshold violation; and
means for initiating the enforcement module to perform traffic regulation when the violation is detected.

10. The communication system according to claim 7, wherein the Communication Module comprises:
means for packing the QoS information in a known format before sending the QoS information to the central controller;
means for parsing QoS enforcement information received from the central controller;
means for updating terminal state based on the QoS enforcement information received from the central controller; and
means for initiating the enforcement module to perform a relevant correction in the enforcement information received from the central controller if necessary.

11. The communication system according to claim 7 wherein the enforcement module further comprises means for performing traffic regulation at the terminal in order to regulate terminal performance.

12. The communication system according to claim 11, wherein the enforcement module comprises at least any one of the following means:
means for classifying packets into different priorities within the terminal;
means for managing dropping of packets within the terminal when resource quota allocated to the terminal is used up;
means for reducing congestion at the terminal by lowering a transmission rate;
means for reducing congestion at the terminal by delaying transmission of packets when insufficient resource is allocated to the terminal;
means for terminating sessions and stopping transmission of packets;
means for reducing outgoing traffic by limiting total number of outgoing sessions;
means for reducing incoming traffic by limiting total number of incoming sessions; and
means for reducing incoming traffic by requesting for less incoming traffic.

13. The communication system according to claim 1, wherein the central database stores;
information on QoS profile of each individual user's subscription information;
information on status of the individual terminal;
information on service agreements between networks;
information on status of the network providing service to the terminal; and
information on policy handling mechanism for QoS management.

14. A communication method in a communication system, wherein the communication system for achieving end-to-end Quality of Service in a mobile network using terminal centric control comprises a terminal with QoS control module that is capable of performing QoS monitoring, reporting and enforcement, a central controller that accepts QoS reports from the terminal and gives QoS enforcement instructions to the QoS control module in the terminal, and a central database that stores subscription information of a user who uses the terminal and service level agreement information, comprising:
a step where the QoS control module collects service and QoS statistics, and feedbacks them to the central controller;
a step where the central controller receives QoS records from the QoS control modules;
a step where the central controller performs QoS management based on the QoS records from the terminal and its subscription information;
a step where the central controller sends QoS enforcement rules to the QoS control module for QoS adjustment; and
a step where the QoS control module performs QoS enforcement rules sent from the central controller, and also performs local enforcement decisions within itself.

15. The communication method according to claim 14, comprising:
a step where the central controller updates the central database about the terminal's status; and
a step where the central controller retrieves terminal information from the central database for QoS management.

16. The communication method according to claim 14, wherein the communication system further comprises a monitoring node in the network where the terminal is attached to that would report network information relevant to the terminal to the central controller, and an enforcement node in the network where the terminal is attached to that would carry out enforcement command from the central controller to provide service to the terminal, comprising;
a step where the enforcement node provides service to the terminal to collect network status information regarding the terminal and feedbacks the collected network status information to the central controller;
a step where the enforcement node provides service to the terminal to perform local admission control based on local policy;
a step where the central controller performs QoS management and decides QoS enforcement rules based on the feedback information; and
a step where the enforcement node provides service to the terminal to carry out QoS rules sent from the central controller.

17. The communication method according to claim 14, comprising:
a step where the terminal embeds QoS control capability information in a session control message and sends this information to a session control server during session initiation;
a step where the central controller initiates a monitor session when the session control server detects the QoS control capability information;
a step where the central controller replies to the terminal with a QoS control capability embedded in an acknowledgement message; and
a step where the terminal initiates the QoS control module when the acknowledgement message from the session initiation contains the QoS control capability information,
whereby communication channel between the QoS control module in the terminal and the central controller for performing QoS control is established.

18. The communication method according to claim 17, comprising:
a step where the terminal embeds QoS reporting information in a session control message and sends the information to the session control server using the established communication channel;
a step where the session control server parses the QoS reporting information embedded in the session control message; and
a step where the session control server passes the QoS reporting information to the central controller,
whereby the QoS control module reports the QoS information to the central controller.

19. The communication method according to claim 18 further comprising a step where the central controller stores the QoS reporting information at a back-end database.

20. The communication method according to claim 17, comprising:
a step where the central controller embeds QoS enforcement information in a session control message and sends it to a session client at the terminal using the communication channel;
a step where the session client parses the QoS enforcement information embedded in the session control message by session application; and
a step where the session client passes the QoS enforcement information to the QoS control module.

21. The communication method according to claim 20 further comprising a step where the terminal stores the QoS enforcement information at the terminal's local database.

22. The communication method according to claim 16, comprising:
a step of computing and setting threshold and boundary values for triggering monitoring events at the terminal;
a step of triggering violation events when violation is detected at the terminal;
a step where triggering non-violation events for non-violation monitoring events at the terminal,
whereby the monitoring module of the QoS control module at the terminal performs traffic monitoring.

23. The communication method according to claim 14, comprising:
a step where the terminal requests for a QoS control service during the access control process when the terminal attaches to a network;
a step where the central controller initiates a monitor session when an access control server informs the central controller of the QoS control service request;
a step where tunnelling channel information is allocated and embedded into the access control reply by the central controller; and
a step where the tunnelling channel information is received, and the tunnelling channel is set up between the QoS control module at the terminal and the central controller using this information,
whereby communication channel between the QoS control module in the terminal and the central controller for performing QoS control is established.

24. The communication method according to claim 23, comprising:
a step of collecting the terminal's QoS information;
a step of packing the QoS information into a specified QoS report format; and
a step of sending out the QoS report to the central controller,
whereby the QoS control module reports the QoS information to the central controller.

25. The communication method according to claim 24 further comprising a step of storing the collected QoS information locally at the terminal's local database.

26. The communication method according to claim 23, comprising:
a step where the central controller receives the QoS report from the terminal;
a step where the central controller compares the QoS report received with QoS profile obtained from the back-end database;
a step where the central controller packs the QoS feedback information into a specified QoS feedback report format; and
a step where the central controller sends out the QoS feedback report to the terminal,
whereby the central controller feedbacks to the QoS control module in the terminal.

27. The communication method according to claim 19 or 25, comprising:
a step where the central controller loads the service user's QoS profile from the back-end database;
a step where the central controller loads the intermediate networks QoS profile from the back-end database;
a step where the central controller obtains the status of intermediate networks from network's enforcement node;
a step where the central controller obtains the status of the terminal via reporting from communication channels;
a step where the central controller compares the state of the terminal with terminal's QoS profile; and
a step where the central controller compares the state of the network node with the network QoS profile.

28. The communication method according to claim 23, comprising:
a step where the central controller decides on actions to be taken based on policy handling mechanism information stored in a back-end database;
a step where the central controller packs action information with relevant QoS parameters into an QoS enforcement message format; and
a step where the central controller sends the QoS enforcement message to the QoS control module of the terminal that needs to perform correction.

29. A communication method in a communication system, wherein the communication system for achieving end-to-end Quality of Service in a mobile network using terminal centric control comprises a terminal with QoS control module that is capable of performing QoS monitoring, reporting and enforcement, a central controller that accepts QoS reports from the terminal and gives QoS enforcement instructions to the QoS control module in the terminal, and a central database that stores subscription information of a user who uses the terminal and service level agreement information, comprising:
a step of computing a threshold value of QoS metrics that needs to be monitored;
a step of performing local QoS adjustment to the terminal if the measurement of the QoS metrics is not within the valid range of the threshold value as computed;
a step of collecting QoS information and usage and adjustment statistics at the terminal;
a step of sending the QoS information in a predetermined report format to the central controller;
a step of receiving of QoS enforcement feedback from the central controller; and
a step of performing correction based on the feedback from the central controller.

30. The communication method according to claim 29, comprising:
a step of updating the terminal's local database with the QoS data collected; and
a step of updating the terminal's local database with the enforcement feedback received from the central controller.

31. The communication method according to claim 29 wherein packet transmission at terminal is delayed for the local QoS adjustments to the terminal.

32. The communication method according to claim 29 wherein packet is dropped at the terminal for the local QoS adjustments to the terminal.

33. The communication method according to claim 29 wherein packet transmission rate is reduced at the terminal for the local QoS adjustments to the terminal.

34. The communication method according to claim 29 wherein request for receiving channels is reduced at terminal for the local QoS adjustments to the terminal.

35. The communication method according to claim 29 wherein transmission/receiving session initiated by the terminal is gracefully self-terminated for the local QoS adjustments to the terminal.

36. The communication method according to claim 14, wherein a data format for reporting information from the terminal to the central controller includes:
message ID to distinguish the different incoming messages;
message length to indicate length of the entire message for reporting status; and
QoS reporting data including attribute value pair that contain the QoS type and its value.

37. The communication method according to claim 14, wherein a data format for QoS enforcement information from the terminal to the central controller includes:
message ID to distinguish the different incoming messages;
action ID to indicate the action to be carried out; and
QoS enforcement data that contains parameters associated with the action ID.

38. The communication method according to claim 37, comprising:
a step of checking the action ID referring a pre-defined template; and
a step of packing or unpacking the QoS enforcement data according to the pre-defined template,
whereby the action ID of the QoS enforcement data is encoded and/or decoded.
